# EUROPEAN PATENT SPECIFICATION

(11) **EP 1 945 495 B1**
(45) Date of publication and mention of the grant of the patent: **06.10.2010**
(21) Application number: 05798817.2
(22) Date of filing: 31.10.2005
(51) Int. Cl.: B62D 27/06, B60R 13/02, B62D 29/04, B62D 65/14

(54) **ATTACHMENT MEANS AND A METHOD FOR FASTENING VEHICLE PANELS USING SAID ATTACHMENT MEANS**
BEFESTIGUNGSMITTEL UND VERFAHREN ZUR BEFESTIGUNG VON FAHRZEUGPLATTEN UNTER VERWENDUNG DES BEFESTIGUNGSMITTELS
MOYEN DE FIXATION ET PROCÉDÉ DE FIXATION DE PANNEAUX DE VÉHICULE UTILISANT LEDIT MOYEN DE FIXATION

(43) Date of publication of application: 23.07.2008
(73) Proprietor: Volvo Construction Equipment AB, 631 85 Eskilstuna (SE)
(72) Inventor: ARMÖ, Sverker, S-632 28 Eskilstuna (SE)
(74) Representative: Fröhling, Werner Otto
(86) International application number: PCT/SE2005/001634
(87) International publication number: WO 2007/053067

(56) References cited:
- EP-A1- 1 486 402
- EP-B- 1 497 153
- DE-A1- 10 013 574
- DE-C2- 19 507 986
- US-A- 5 454 453
- US-A- 5 473 125

## Description

### TECHNICAL FIELD

The present invention relates to an attachment means intended for fastening vehicle panels and a method for attaching panels using said attachment means: The attachment means may be used for either exterior and interior panels made from metal, plastic or any other suitable material.

### BACKGROUND ART

A vehicle frame or structure is often covered by an outer panel to give an outer or inner surface of the vehicle a desired functional or aesthetic design, shape or colour. Panels of this type may be used to cover or protect various mechanical or electronic equipment, or simply to cover structural components or beams that need not be accessed by a user after assembly of the vehicle. At the same time, it is often desirable to make such panels removable to allow access for service or replacement of a damaged panel.

A known method of attaching panels onto an exterior or interior surface of a vehicle is to attach weld screws or threaded nuts onto a supporting structure. The panel is then positioned on the vehicle so that recesses in the panel coincide with the weld screws, whereby the panel is screwed into place. A problem relating to this method is that the supporting structure may be damaged during attachment of the weld screws, primarily caused by the localized heating of the material adjacent the relatively small weld screw. This may be a particular problem if the supporting structure comprises a relatively thin sheet metal. The welding process may also cause damage or discoloration on the rear surface of the supporting structure, requiring additional painting or covering of this surface. A further problem occurs if the panel is to be mounted in a narrow space or behind equipment such as a handrail or similar. It may then be necessary to bend or deform the panel locally in order to position some recesses over their corresponding weld screw. This makes the assembly of the panel more complicated and time consuming and may cause injury to the person carrying out the assembly. Also, bending of the panel may cause permanent deformation or cracks in parts of the panel.

Another method of attaching panels is to provide either the panel or the supporting structure with recesses, which recesses cooperate with snap-on clips on the supporting structure or the panel, respectively. One example of such clips is known from EP 1 292 486. Said European document is taken as basis for the disclosure of the preamble features of claim 1. A problem with this method is that if one of said clips breaks during assembly of the panel, the entire panel may have to be removed in order to replace the clip. Also, when removing the panel, during assembly or at a later date, clips of this type are prone to breaking, requiring replacement of multiple clips. A further problem is that snap-on clips may not fix the panel sufficiently to the supporting structure, resulting in rattling a noise as the vehicle moves over uneven ground.

This invention aims to solve these problems by providing an improved fastening element that allows a panel to be attached and removed without the use of fixing means that may damage the attachment means, the panel or the supporting structure. The attachment means will also facilitate mounting of panels on the supporting structure in a confined space.

### DISCLOSURE OF INVENTION

The above problems are solved by a fastening element according to claim 1 and its dependent claims, and a method for mounting panels in a vehicle using said fastening element according to claim 11 and its dependent claims.

According to a preferred embodiment, the invention relates to an attachment means for attaching a panel to a supporting structure on a vehicle. The attachment means may comprise a profile with a first section extending substantially outwards from the supporting structure and a second section extending in a plane substantially parallel to the supporting structure. The second section may be arranged to extend into a recess in an outer edge along one side of the panel, in order to locate and fix one end of the panel in at least one direction. The side edge of the panel is preferably, but not necessarily located in a substantially vertical plane. However, the position of the side edge may vary depending on where the panel is to be mounted, or on the location of the supporting structure onto which the attachment means are fixed.

According to one embodiment, the profile may comprise a third section which extends parallel to and is attached to the supporting structure. An attachment means of this type may have a substantially U- or J-shaped cross-section. The relative dimensions of the first section are dependent on a number of factors, such as the weight or thickness of the panel and/or the desired distance between the supporting structure and the inner surface of the panel. The relative dimensions of the second and third sections depend on factors such as the size and weight of the panel, the depth of the recess in the panel, etc.

The attachment means may be permanently attached to the support structure by welding. Alternatively, the attachment means may be attached to the support structure by mechanical fastening means or by means of a suitable adhesive. The type or means used for attaching the profile may be dependent on the size and/or weight of the panel, the type of vehicle and the area of use of the vehicle. For instance, a relatively heavy panel attached to a work vehicle may be subjected to relatively large forces and/or vibrations, requiring the attachment means to be permanently welded to a load bearing structural part or closed profile beam in the vehicle. According to a preferred embodiment, plug welding may be used in order to prevent the thickness of the weld from exceeding the thickness off the third section in contact with the support structure. This solution may be used in locations where the supporting structure may comprise a closed profile. In may preferably be used for mounting panels on vehicles manufactured in relatively small series, as attaching the profile can be a relatively labour intensive process.

According to one embodiment, the first and second sections of the attachment means forms an integral, pressed part of the support structure section. This solution may be used in locations where the supporting structure does not comprise a closed profile. In may preferably be used for mounting smaller and/or lighter panels on vehicles manufactured in relatively large series, as the pressing step may suitably be performed when manufacturing of the supporting structure.

The above embodiments allows for panels to be mounted in confined spaces, where standard attachment means are difficult to fit or access, such as behind handrails or in or near internal corners.

According to one embodiment, the second section may comprise a free end that is at least partially enclosed-by a resident material, which material is arranged to be located between the second section and the recess. The free end may be a straight edge wherein a substantially U-shaped resilient component encloses the free end on three sides. The resilient component may be extruded to give a suitable profile and may preferably, but not necessarily, be cut to a length longer than the width of the free end of the second section, but not exceeding the width of the recess.

According to an alternative embodiment, the second section comprises a free end enclosed by a bushing of a resilient material, which bushing has recess is arranged to correspond to the shape of the free end. Here, the shape of the free is preferably, but not necessarily a straight edge. The resilient component may be injection moulded to give a suitable shape and/or profile. The resilient component may preferably, but not necessarily, be dimensioned so that the recess corresponds to the shape the free end of the second profile, and that its outer dimensions substantially corresponds to the shape of the recess in the edge of the panel.

According to an alternative embodiment, the enclosing resilient material or components described above may be provided with extruded or injection moulded ribs and/or projections on at least a pair of opposing major outer surfaces, which ribs, projections or a combination thereof are arranged to be at least partially deformed upon contract with the recess. For instance, the resilient component may be provided with a series of parallel ribs extending at right angles to the direction in which the free end enters the recess in the panel. The ribs may have a triangular, square or semi-circular cross-section. This may allow the panel to be press fitted onto the second section of the attachment means, under simultaneous deformation of the ribs. This causes the panel to be exactly located onto the attachment means, while preventing chafing or scratching of the panel during the mounting process. The ribs will also reduce the surface friction between the profile and recess during mounting of the panel. In addition, the resilient component will absorb vibration and prevent rattling from occurring when the vehicle is in use.

A non-limiting example of a suitable resilient material is Ethylene Propylene Diene Monomer, or EPDM. This material will retain good shape stability in temperatures up to about +85 °C, and will retain its elasticity in temperatures below about -40°C

The invention further relates to a method for attaching a panel to a supporting structure on a vehicle, using at least one attachment means according to the invention. The method may comprise the steps of:
- attaching the attachment means onto a first section of the supporting structure,
- positioning the panel relative to the supporting structure, wherein an edge at a first end of the panel comprising at least one recess is located adjacent said attachment means,
- displacing the panel towards the attachment means, whereby each recess in an outer edge of the panel mates with a free end of a corresponding attachment means, and
- attaching at least a second, opposite end of the panel to a second section of the supporting structure.

A relatively exact location of the panel can also be achieved either by using separate attachment means at a second end of the panel. Alternatively it is possible to use a suitable section of the profile as a reference point and/or a combination of the separate attachment means and the profile. Attaching at least a second, opposite end of the panel may be performed by screwing or otherwise suitable fastening means. In this way, the second, opposite end of the panel may be attached to the second and/or other section of the supporting structure, which section is arranged at a location removed from the first section of the supporting structure.

When performing the method, it may comprise the further step of mounting a bushing of a resilient material on the free end of each attachment means prior to positioning of the panel. Alternatively, the bushing of a resilient material may be mounted in each recess prior to positioning of the panel. In the latter case, the opening around the recess for the free end of the second section may be rounded or bevelled to facilitate mounting.

### BRIEF DESCRIPTION OF DRAWINGS

In the following text, the invention will be described in detail with reference to the attached drawings. These schematic drawings are used for illustration only and do not in any way limit the scope of the invention. In the drawings:
- Figure 1: shows an exploded view of an attachment means according to one embodiment of the invention;
- Figure 2: shows a section of a panel mounted onto the attachment means of Figure 1;
- Figure 3: shows a cross-section of the attachment means of Figure 2;
- Figure 4: shows an exploded view of an attachment means according to one embodiment of the invention;
- Figure 5: shows a section of a panel mounted onto the attachment means of Figure 4; and
- Figure 6: shows a cross-section of the attachment means of Figure 5.

### EMBODIMENTS OF THE INVENTION

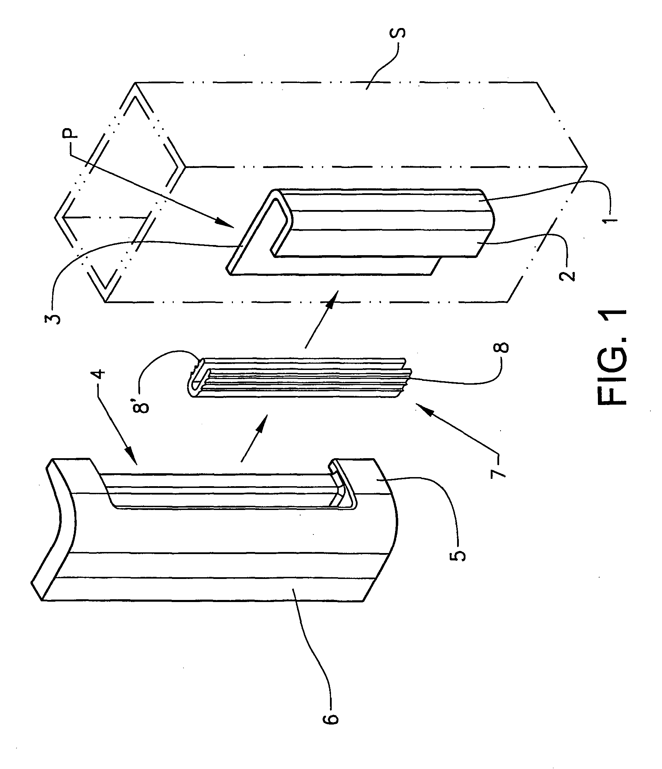

Figure 1 shows an exploded view of an attachment means according to a first embodiment of the invention, comprising a substantially J-shaped profile P with a first section 1 extending outwards from a schematically indicated supporting structure S, a second section 2 extending in a plane substantially parallel to the supporting structure S, and a third section 3 extending in a plane parallel to and attached to the supporting structure S. The supporting structure is schematically indicated as a profile comprising a closed section. The second section 2 is arranged to extend into a recess 4 in an outer edge 5 along one side of a panel 6, in order to locate and fix one end of the panel 6 relative to the supporting structure S. The second section has a free end extending towards the recess 4, which free end is provided with a substantially U-shaped component 7 made from a resilient material that encloses the free end on three sides. The U-shaped component 7 is arranged to be located between the second section 2 and the recess 4. In the shown example, the free end facing the recess 4 has a straight edge wherein the U-shaped component 7 used is an extruded profile made from EPDM. The component 7 has been cut to a length equal to the width of the recess, which is larger than the width of the free end of the second section 2. The U-shaped component 7 has a pair of major outer surfaces 8, 8', which will extend substantially parallel to the supporting structure S when the component 7 is mounted on the profile P. The outer surfaces 8, 8' are provided with integral extruded triangular ribs which will be resiliently deformed when in contact with opposing inner walls of the recess 4. The ribs on each side of the component 7 have an angled front surface facing the recess 4 in the panel 6, and a rear surface perpendicular to the direction in which the panel is mounted onto the profile. The ribs will reduce the surface friction between the profile and recess during mounting of the panel.

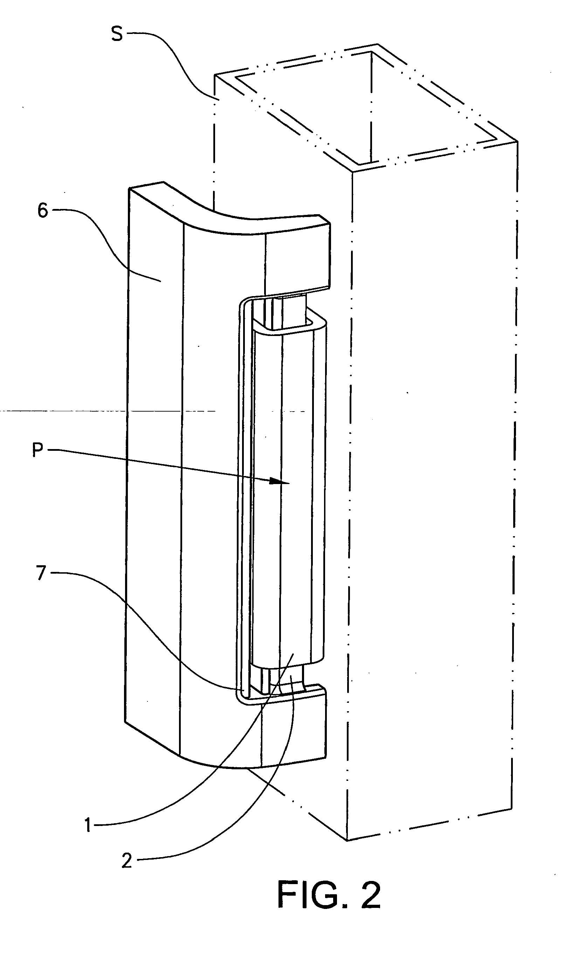

Figure 2 shows a section of a panel 6 mounted onto a profile P according to the invention. As can be seen from the figure, the attachment means is almost completely hidden from view by the panel. Apart from reducing the number of operations to be carried out during assembly of the panel 6, the solution allows for a simplified assembly in a confined space, e.g. behind hand rail or other structures, or in internal corners.

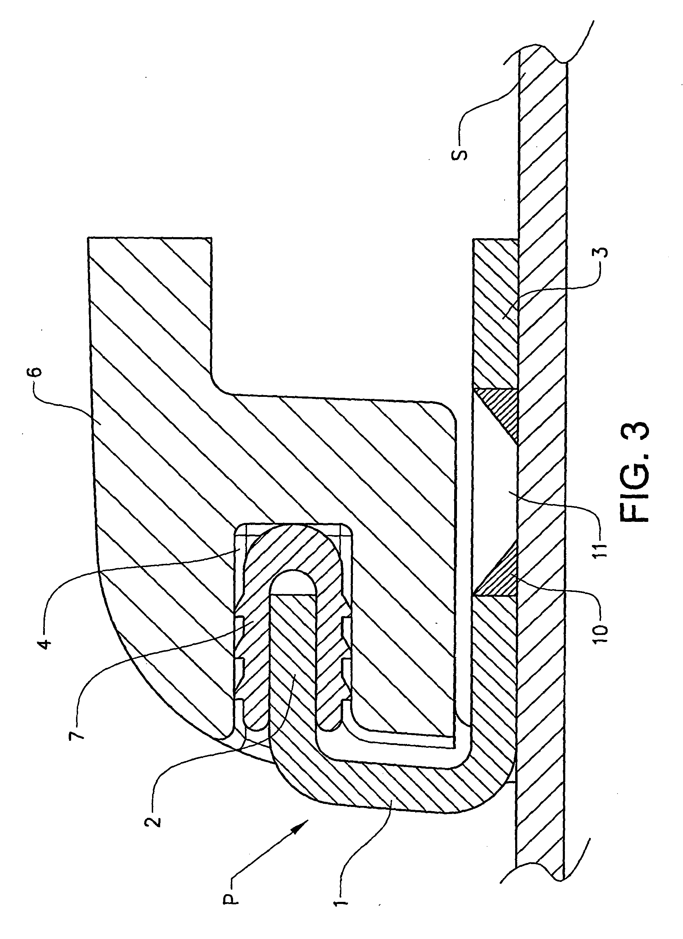

Figure 3 shows a cross-section of a panel mounted onto the attachment means of Figure 2. The Figure shows the J-shaped profile P attached to the supporting structure S by means of a plug weld 10 in an opening 11 through the third section 3 of the profile. The panel 6 has been mounted on the second section 2 of the profile, wherein the recess 4 has been pressed onto the free end of the second section 2 with its U-shaped resilient component 7.

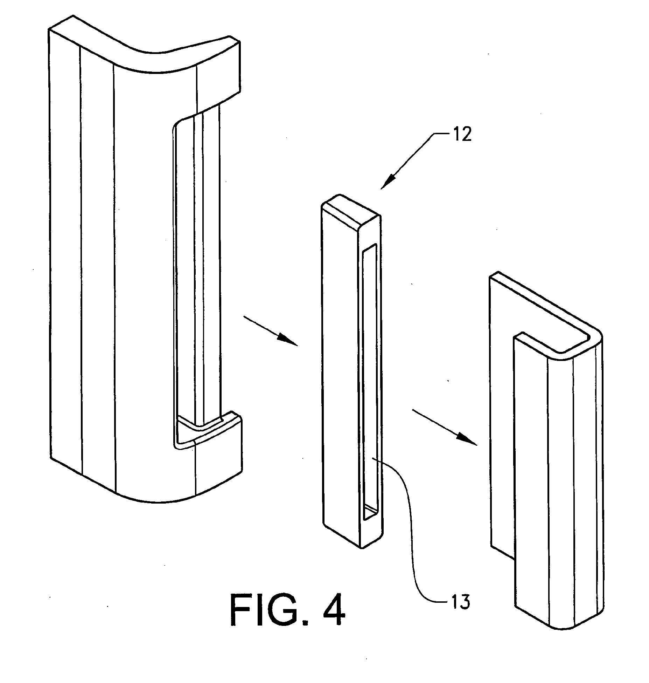

Figure 4 shows an exploded view of an attachment means according to a second embodiment of the invention, comprising a substantially J-shaped profile P with a first section 1 extending outwards from a schematically indicated supporting structure S, a second section 2 extending in a plane substantially parallel to the supporting structure S, and a third section 3 extending in a plane parallel to and attached to the supporting structure S. The attachment means in Figure 4 differs from the embodiment of Figure 3 in that the second section has a free end extending towards the recess 4, which free end is provided with a bushing 12 made from a resilient material that encloses the free end on all sides. The resilient bushing 12 is arranged to be located between the second section 2 and the recess 4. In the shown example, the free end facing the recess 4 has a straight edge wherein the bushing 12 has been provided with a recess 13 with an internal shape conforming to the shape of said free edge. The resilient bushing 12 used is an injection-moulded profile made from EPDM.

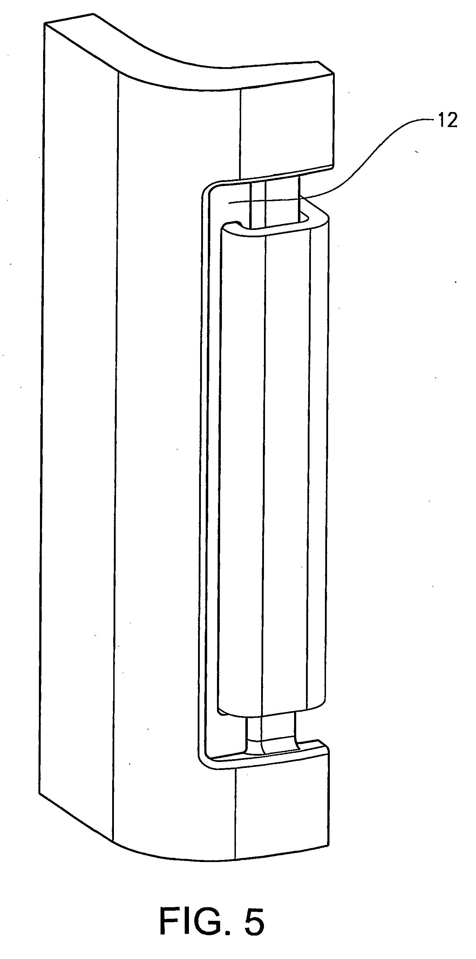

Figure 5 shows a section of a panel mounted onto the attachment means of Figure 4. As described above, the attachment means is almost completely hidden from view by the panel. In addition, as the bushing 12 encloses the free end of the second section 2 on all four sides, the panel 6 can be located with relatively high accuracy with respect to the profile P. Location of the panel 6 in the direction of mounting is achieved by a separate attachment means on an opposite edge of the panel (not shown). Location of the panel can also be achieved using a suitable section of the profile as a reference point and/or a combination of the separate attachment means and the profile. The bushing 12 will also be able to absorb vibrations in multiple directions.

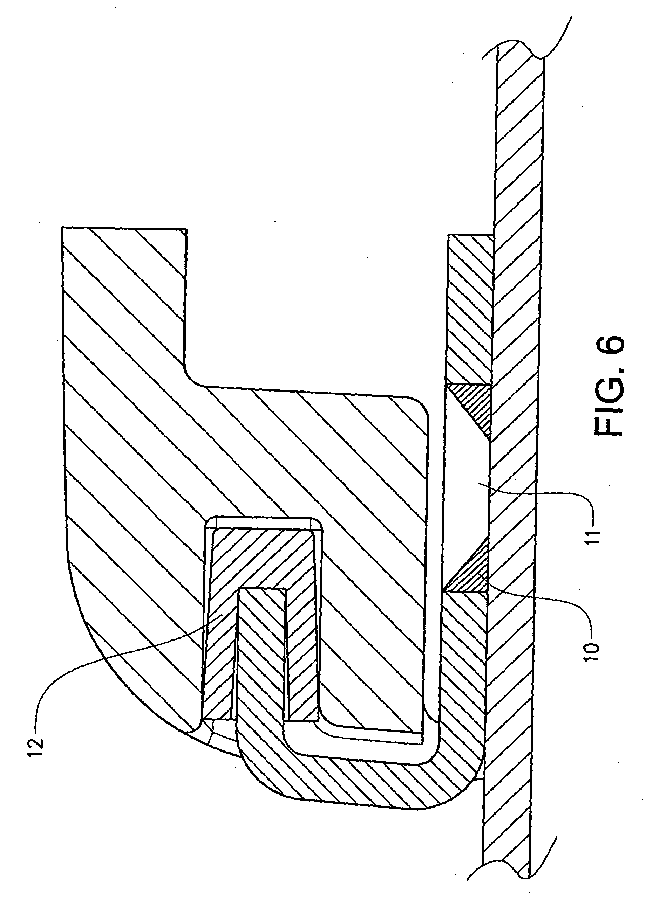

Figure 6 shows a cross-section of the attachment means of Figure 5. The Figure shows the J-shaped profile P attached to the supporting structure S by means of a plug weld 10 in an opening 11 through the third section 3 of the profile. The panel 6 has been mounted on the second section 2 of the profile, wherein the recess 4 has been pressed onto the free end of the second section 2 with its injection moulded component 12. Although not shown here, the component 12 may be provided with ribs or projections in the same way as described in connection with Figures 2 and 3 above.

The invention is not limited to the above embodiments, but may be varied within the scope of the claims.

## Claims

1. Attachment means for attaching a panel (6) to a supporting structure on a vehicle, wherein the attachment means comprises a profile (P) with a first section (1) extending outwards from the supporting structure (S) and a second section (2) extending in a plane substantially parallel to the supporting structure (S), wherein the second section (2) is arranged to extend into a recess (4) in an outer edge along one side of the panel (6) **characterized in that** the profile (P) has a substantially U- or J-shaped cross-section and that the second section (2) comprises a free end that is at least partially enclosed by a resilient material (7, 12), which material is arranged to be located between the second section and the recess (4) in the panel (6).

2. Attachment means according to claim 1, **characterized in that** the profile comprises a third section (3) which extends parallel to and is attached to the supporting structure (S).

3. Attachment means according to claim 1 or 2, **characterized in that** the profile (P) s attached to the support structure by welding.4.

4. Attachment means according to claim 1 or 2, **characterized in that** the profile (P) is attached to the support structure by mechanical fastening means.

5. Attachment means according to claim 1 or 2, **characterized in that** the profile (P) is attached to the support structure by means of an adhesive.

6. Attachment means according to claim 1, **characterized in that** the first and second sections (1, 2) of the profile (P) forms an integral, pressed part of the support structure section (S),

7. Attachment means according to any preceding claim, **characterized in that** the second section (2) comprises a free end enclosed by a bushing (12) of a resilient material, which bushing has recess (13) for the free end.

8. Attachment means according to any preceding claim, **characterized in that** the enclosing resilient material is provided with ribs and/or projections on at least a pair of opposing major outer surfaces (8, 8'), which ribs and/or projections are arranged to be at least partially deformed upon contact with the recess (4) in the panel (6).

9. Method for attaching a panel to a supporting structure on a vehicle, using at least one attachment means according to claim 1, **characterized in** the following steps:- attaching the attachment means onto the supporting structure,
- positioning the panel relative to the supporting structure, wherein an edge at a first end of the panel comprising at least one recess is located adjacent said attachment means,
- displacing the panel towards the attachment means, whereby each recess in an outer edge of the panel mates with a free end of a corresponding attachment means, and
- attaching at least a second, opposite end of the panel to the supporting structure, and
- mounting a bushing of a resilient material on the free end of each attachment means prior to positioning of the panel.

10. Method according to claim 9, **characterized in** the further step of mounting a bushing of a resilient material in each recess prior to positioning of the panel.

## Patentansprüche

1. Befestigungseinrichtung zur Befestigung einer Verkleidung (6) an einem Tragaufbau an einem Fahrzeug, wobei die Befestigungseinrichtung ein Profil (P) mit einem ersten Abschnitt (1), der sich von dem Tragaufbau (S) nach außen erstreckt, und einem zweiten Abschnitt (2), der sich in einer Ebene erstreckt, die im Wesentlichen parallel zu dem Tragaufbau (S) verläuft, umfasst, wobei der zweite Abschnitt (2) so ausgebildet ist, dass er sich in eine Ausnehmung (4) in einem Außenrand entlang einer Seite der Verkleidung (6) erstreckt, **dadurch gekennzeichnet, dass** das Profil (P) einen im Wesentlichen U- oder J-förmigen Querschnitt aufweist, und dass der zweite Abschnitt (2) ein freies Ende umfasst, das wenigstens teilweise von einem elastischem Material (7, 12) umschlossen ist, wobei das Material so ausgebildet ist, dass es zwischen dem zweiten Abschnitt und der Ausnehmung (4) in der Verkleidung (6) angeordnet wird.

2. Befestigungseinrichtung nach Anspruch 1, **dadurch gekennzeichnet, dass** das Profil einen dritten Abschnitt (3) umfasst, der sich parallel zu dem Tragaufbau (S) erstreckt und an diesem befestigt ist.

3. Befestigungseinrichtung nach Anspruch 1 oder 2, **dadurch gekennzeichnet, dass** das Profil (P) durch Schweißen an dem Tragaufbau befestigt ist.

4. Befestigungseinrichtung nach Anspruch 1 oder 2, **dadurch gekennzeichnet, dass** das Profil (P) an dem Tragaufbau durch mechanische Befestigungseinrichtungen befestigt ist.

5. Befestigungseinrichtung nach Anspruch 1 oder 2, **dadurch gekennzeichnet, dass** das Profil (P) an dem Tragaufbau durch Klebemittel befestigt ist.

6. Befestigungseinrichtung nach Anspruch 1, **dadurch gekennzeichnet, dass** der erste und der zweite Abschnitt (1, 2) des Profils (P) ein einteiliges Pressteil des Tragaufbaus (S) bilden.

7. Befestigungseinrichtung nach einem vorhergehenden Anspruch, **dadurch gekennzeichnet, dass** der zweite Abschnitt (2) ein freies Ende umfasst, das von einer Buchse (12) aus einem elastischen Material umschlossen ist, wobei die Buchse eine Ausnehmung (13) für das freie Ende aufweist.

8. Befestigungseinrichtung nach einem vorhergehenden Anspruch, **dadurch gekennzeichnet, dass** das umschließende elastische Material mit Rippen und/oder Vorsprüngen an wenigstens einem Paar gegenüberliegender größerer Außenflächen (8, 8') versehen ist, wobei die Rippen und/oder Vorsprünge so ausgebildet sind, dass sie bei einem Kontakt mit der Ausnehmung (4) in der Verkleidung (6) wenigstens teilweise verformt werden.

9. Verfahren zur Befestigung einer Verkleidung an einem Tragaufbau an einem Fahrzeug unter Verwendung wenigstens einer Befestigungseinrichtung nach Anspruch 1, **gekennzeichnet durch** die folgenden Schritte:
- Befestigung der Befestigungseinrichtung an dem Tragaufbau,
- Positionierung der Verkleidung bezüglich des Tragaufbaus, wobei ein Rand an einem ersten Ende der Verkleidung wenigstens eine Ausnehmung umfasst, die angrenzend an die Befestigungseinrichtung angeordnet ist,
- Verschiebung der Verkleidung in Richtung der Befestigungseinrichtung, wobei jede Ausnehmung in einem äußeren Rand der Verkleidung passend zu einem freien Ende einer entsprechenden Befestigungseinrichtung ist, und
- Befestigung wenigstens eines zweiten entgegengesetzten Endes der Verkleidung an dem Tragaufbau und
- Anbringung einer Buchse aus elastischem Material an dem freien Ende jeder Befestigungseinrichtung vor der Positionierung der Verkleidung.

10. Verfahren nach Anspruch 9, **gekennzeichnet durch** den weiteren Schritt der Anbringung einer Buchse aus elastischem Material in jeder Ausnehmung vor der Positionierung der Verkleidung.

## Revendications

1. Moyens de fixation pour fixer un panneau (6) sur une structure de support sur un véhicule, les moyens de fixation comprenant un profilé (P) ayant une première section (1) s'étendant vers l'extérieur par rapport à la structure de support (S), et une deuxième section (2) s'étendant dans un plan sensiblement parallèle à la structure de support (S), la deuxième section (2) étant agencée pour s'étendre dans un évidement (4) situé dans un bord extérieur le long d'un côté du panneau (6), **caractérisés en ce que** le profilé (8) a une coupe transversale sensiblement en forme de U ou de G, et **en ce que** la deuxième section (2) comprend une extrémité libre qui est au moins partiellement entourée par un matériau souple (7, 12), lequel matériau est agencé pour être positionné entre la deuxième section et l'évidement (4) situé dans le panneau (6).

2. Moyens de fixation selon la revendication 1, **caractérisés en ce que** le profilé comprend une troisième section (3) qui s'étend parallèle à la structure de support (S), et qui est fixé sur celle-ci.

3. Moyens de fixation selon la revendication 1 ou 2, **caractérisés en ce que** le profilé (P) est fixé sur la structure de support par soudage.

4. Moyens de fixation selon la revendication 1 ou 2, **caractérisés en ce que** le profilé (P) est fixé sur la structure de support par des moyens de fixation mécanique.

5. Moyens de fixation selon la revendication 1 ou 2, **caractérisés en ce que** le profilé (P) est fixé sur la structure de support au moyen d'un adhésif.

6. Moyens de fixation selon la revendication 1, **caractérisés en ce que** les première et deuxième sections (1, 2) du profilé (P) forment une partie comprimée en un seul bloc de la section de structure de support (S).

7. Moyens de fixation selon l'une quelconque des revendications précédentes, **caractérisés en ce que** la deuxième section (2) comprend une extrémité libre entourée par un manchon (12) d'un matériau élastique, lequel manchon a un évidement (13) pour l'extrémité libre.

8. Moyens de fixation selon l'une quelconque des revendications précédentes, **caractérisés en ce que** le matériau souple entourant est muni de nervures et/ou de saillies sur au moins une paire de surfaces externes majeures opposées (8, 8'), lesquelles nervures et/ou saillies sont agencées pour être au moins partiellement déformées lors d'un contact avec l'évidement (4) dans le panneau (6).

9. Procédé pour fixer un panneau sur une structure de support sur un véhicule en utilisant au moins des moyens de fixation selon la revendication 1, **caractérisé en ce qu'**il comprend les étapes suivantes consistant à :
- fixer les moyens de fixation sur la structure de support,
- positionner le panneau par rapport à la structure de support, un bord d'au moins une première extrémité du panneau comprenant au moins un évidement positionné adjacent auxdits moyens de fixation,
- déplacer le panneau vers les moyens de fixation, de telle sorte que chaque évidement dans un bord extérieur du panneau s'apparie à une extrémité libre de moyens de fixation correspondants, et
- fixer au moins une seconde extrémité opposée du panneau sur la structure de support, et
- monter un manchon d'un matériau souple sur l'extrémité libre de chacun des moyens de fixation, avant positionnement du panneau.

10. Procédé selon la revendication 9, **caractérisé par** l'étape supplémentaire consistant à monter un manchon d'un matériau élastique dans chaque évidement avant positionnement du panneau.
